# EUROPÄISCHE PATENTSCHRIFT

(11) **EP 2 246 658 B1**
(45) Veröffentlichungstag und Bekanntmachung des Hinweises auf die Patenterteilung: **04.01.2012**
(21) Anmeldenummer: 10004352.0
(22) Anmeldetag: 23.04.2010
(51) Int. Cl.: G01B 5/20, B23F 23/12

(54) **Verfahren zum Vermessen von Zahnlücken**
Method for measuring gaps between teeth
Procédé destiné à la mesure d'entredents

(30) Priorität: 30.04.2009 DE 102009019286
(43) Veröffentlichungstag der Anmeldung: 03.11.2010
(73) Patentinhaber: Höfler Maschinenbau GmbH, 76275 Ettlingen (DE)
(72) Erfinder: Bister, Gerd, 78727 Oberndorf (DE); Göpper, Dominique, 76189 Karlsruhe (DE); Schweizer, Martin, 76437 Rastatt (DE)
(74) Vertreter: Mischung, Ralf

(56) Entgegenhaltungen:
- WO-A1-2006/122812
- DE-A1- 2 833 923
- GB-A- 2 205 161

## Beschreibung

Die vorliegende Erfindung betrifft ein Verfahren zum Vermessen der Zahnlücke einer Innenverzahnung.

Bei der Herstellung von Innenverzahnungen werden die nach Art eines Rohlings zur Verfügung gestellten Verzahnungskörper vor der das Verzahnungsprofil herausbildenden Schleifbearbeitung zunächst vermessen. Zweck dieser Vermessung ist unter anderem die Ermittlung der optimalen Zahnlückenmitte beziehungsweise des in jeder Zahnlücke des Rohlings bestehenden Übermaßes, welches durch die anschließende Schleifbearbeitung abgetragen werden soll.

Unter "Vermessen" soll im Folgenden ein Verfahren verstanden werden, bei dem eine rotierende Schleifscheibe an die Verzahnung so weit herangefahren wird, bis ein Kontakt besteht, wobei ein mit geeigneten Sensoren leicht zu erfassender Körperschall erzeugt wird. Zweckmäßigerweise wird die Schleifscheibe vor der Kontaktierung zunächst um ein Maß in die vorgefertigte Zahnlücke hinein bewegt, um durch Relativbewegungen von Schleifscheibe und Verzahnung mit dem Rohling in Kontakt gebracht zu werden. Diese Kontaktierung geschieht vorzugsweise zwischen Zahnkopf und Zahnfuß, also auf einer der beiden Zahnflanken der jeweiligen Lücke, um eine möglichst genaue beziehungsweise wirklichkeitsgetreue Messung des auf der Zahnflanke bestehenden Übermaßes erhalten zu können.

Eine derartige Vermessung von Außenverzahnungen ist aus dem Stand der Technik (z.B. WO 2006/122812) bereits bekannt und weitgehend unproblematisch, da die Kontaktierung der Schleifscheibe mit der Zahnflanke relativ leicht und vorzugsweise nur mit translatorischen oder insbesondere nur mit rotatorischen Relativbewegungen zwischen Schleifscheibe und Verzahnung realisierbar ist.

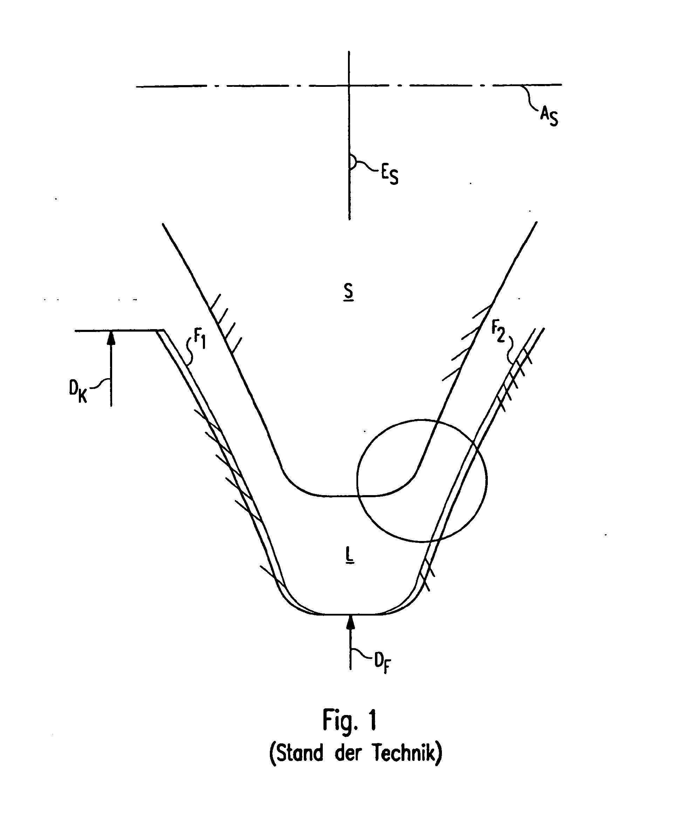

So zeigt Fig. 1 eine Anordnung nach dem aus dem Stand der Technik bekannten Verfahren. In eine Zahnlücke L ragt dabei eine Schleifscheibe S hinein. Zur Vermessung der gesamten Verzahnung beziehungsweise der einzelnen Zahnlücken L wird die in die Lücke L hineinragende Schleifscheibe S beispielsweise in Richtung ihrer Rotationsachse A_{S} verschoben, bis Kontakt zur ersten Zahnflanke F₁ oder der gegenüberliegenden zweiten Zahnflanke F₂ hergestellt ist. Das Profil der Schleifscheibe S beziehungsweise der Zahnlücke L gewährleistet dabei die weitgehend behinderungsfreie Kontaktierung der Zahnflanken im Bereich zwischen Fußkreisdurchmesser D_{F} und Kopfkreisdurchmesser D_{K}.

Anders stellt sich die Situation bei Innenverzahnungen dar. Aufgrund der gegenüber einer Außenverzahnung anderen Zahnflankengeometrie gestaltet sich die Kontaktierung der Zahnflanken mit der Schleifscheibe schwieriger. Auch der möglicherweise nicht genau bekannte Kopfkreisdurchmesser D_{K} oder ein bestehender Grat kann hier dazu führen, dass die Schleifscheibe nicht die eigentlichen Flanken der Zahnlücke kontaktiert, sondern beispielsweise den Zahnkopf, was zu einer verfälschten Messung führen würde.

Aufgabe der Erfindung ist es daher, ein vereinfachtes Vermessungsverfahren für Innenverzahnungen anzubieten.

Die Aufgabe wird gelöst durch ein Verfahren nach Anspruch 1.

Die Erfindung geht von der Erkenntnis aus, dass sich die Zahnflanken einer Innenverzahnung mit einer Schleifscheibe zu Vermessungszwecken besser erreichen lassen, wenn die Rotationsebene der Schleifscheibe einen Winkel α ≠0 bildet mit dem lückenteilenden Fußkreisdurchmesser der jeweils zu vermessenden Zahnlücke. Damit wird die Schleifscheibe in der Zahnlücke schräg gestellt und kann so eine der beiden Flanken der Zahnlücke gezielt im Bereich zwischen Fußkreisdurchmesser und Kopfkreisdurchmesser, also an der Zahnflanke, insbesondere im Bereich der aktiven Evolvente, kontaktieren.

Als "lückenteilender" soll dabei vorzugsweise eine gedachte Gerade verstanden werden, die auf den Zahnfuß der zu bearbeitenden Zahnlücke im Querschnittsprofil und/oder im Bezug auf die Zahnbreite mittig auftrifft. Grundsätzlich kann jedoch auch eine andere, in die Zahnlücke gerichtete Gerade als "lückenteilend" verstanden werden, selbst wenn sie nicht mittig im vorgenannten Sinne auftrifft.

Das erfindungsgemäße Verfahren lässt sich vorteilhaft mit den gängigen Verzahnungsschleifmaschinen durchführen. Maßgeblich für das Messergebnis ist dabei die relative Positionierung von Schleifscheibe und Zahnlücke zueinander, wohingegen die für diese Positionierung bzw. Bewegung gewählten Maschinenachsen grundsätzlich beliebig gewählt werden können, solange die vorbeschriebene Schiefstellung der Schleifscheibe relativ zur Zahnlücke daraus resultiert.

Das erfindungsgemäße Verfahren zum Vermessen der Zahnlücke einer Innenverzahnung sieht vor, dass der Kontakt der Schleifscheibe mit der Verzahnung erkannt und ausgewertet wird, was üblicherweise durch geeignete Körperschallsensoren ermöglicht wird, die den Kontakt zwischen rotierender Schleifscheibe und Verzahnungskörper erkennen. Die Innenverzahnung ist dabei mit einem Kopfkreisdurchmesser und einem Fußkreisdurchmesser um eine Achse ausgebildet, wobei die Schleifscheibe zum Schleifen von Zahnlücken um eine Schleifscheibenachse und in einer Rotationsebene drehbar ist.

Das erfindungsgemäße Verfahren sieht die Erfüllung zweier Bedingungen vor, um die Vermessung der Zahnlücke besonders vorteilhaft ausführen zu können:
A) die Schleifscheibe und die Zahnlücke werden in einer Positionierbewegung relativ zueinander derart ausgerichtet, dass der lückenteilende Fußkreisdurchmesser der zu bearbeitenden Zahnlücke die Rotationsebene der Schleifscheibe unter einem Winkel (α) schneidet mit der Bedingung α ≠0,
B) Die Schleifscheibe und die Zahnlücke werden in einer Antastbewegung relativ zueinander soweit verfahren, bis die Schleifscheibe eine erste Flanke der Zahnlücke im Bereich zwischen Kopfkreisdurchmesser und Fußkreisdurchmesser der Innenverzahnung berührt.

Theoretisch sind Positionierbewegung und Antastbewegung unabhängig voneinander beziehungsweise in beliebiger Reihenfolge und auch als überlagerte Bewegung möglich. Zweckmäßigerweise ist die Bedingung A jedoch spätestens im Moment der Berührung zwischen Schleifscheibe und Flanke gemäß Bedingung B erfüllt.

Eine bevorzugte Ausführungsform des Verfahrens sieht vor, dass die Schleifscheibe im Rahmen der Positionierbewegung in die Zahnlücke hinein bewegt wird und die erfindungsgemäße Schrägstellung einnimmt. Anschließend werden Schleifscheibe und eine der beiden Zahnflanken im Rahmen der Antastbewegung aufeinander zu bewegt, bis sie sich berühren.

Theoretisch ist jedoch auch eine andere Vorgehensweise im Rahmen des erfindungsgemäßen Verfahrens denkbar, wobei die Schrägstellung der Scheibe Teil der Antastbewegung ist, die Scheibe also schräg gestellt wird während sie sich bereits in der Zahnlücke befindet und die Antastbewegung im Wesentlichen durch die Verdrehung der Schleifscheibe relativ zur Zahnlücke gebildet wird. Dies bedeutet aber nicht, dass ausschließlich die Schleifscheibe selbst um den Winkel α geschwenkt wird oder geschwenkt werden muss. Denkbar ist auch das Verdrehen der Innenverzahnung um den Drehwinkel a, während die Schleifscheibe entlang ihrer Rotationsachse positioniert wird (Shift-Bewegung). In diesem Fall wird die Scheibe selbst gar nicht verschwenkt, sondern lediglich translatorisch relativ zum Werkstück bewegt. Der zur Vermessung erfindungsgemäß zu wählende Winkel ergibt sich bei dieser Variante dadurch, dass die Achse der Verzahnung nicht mehr in der Rotationsebene der Schleifscheibe liegt, sondern dazu beabstandet ist.

Wie vorstehend angedeutet bestehen nach einer bevorzugten Ausführungsform des erfindungsgemäßen Verfahrens verschiedene Möglichkeiten, die Antastbewegung auszuführen. Geht man davon aus, dass die Schleifscheibe bereits in die Zahnlücke hinein ragt und ihre Rotationsebene mit dem Fußkreisdurchmesser bereits einen Winkel α ≠0 einschließt, so kann die Antastbewegung realisiert werden durch eine Drehung der Innenverzahnung (V) mit der Zahnlücke (L) um ihre Verzahnungsachse (A_{V}), und/oder eine Verschiebung der Schleifscheibe in ihrer Rotationsebene (E_{S}), und/oder eine Verschiebung der Schleifscheibe in Richtung ihrer Schleifscheibenachse (A_{S}).

Alternativ oder ergänzend zur Verschwenkbarkeit der Scheibe um eine zur Werkstückachse parallele Achse kann die Schleifscheibe im Rahmen der Antast- und/oder Positionierbewegung auch um eine zu einem Werkstück-Radius parallele Achse (um ein bestimmtes Maß oder bis zu Kontaktierung) geschwenkt werden. Sofern die Scheibe dabei bereits in die Zahnlücke hineinragt, nähert sich dabei ein erster Punkt der Scheibe der einen Flanke der Zahnlücke an, während sich ein anderer Punkt der Scheibe durch deren Schrägstellung auf die gegenüberliegende Flanke der Zahnlücke zubewegt. Bei Geradverzahnungen folgt daraus, dass die beiden vorgenannten Kontaktpunkte in unterschiedlichen Höhen liegen ("Höhe" entspricht hier der Ausdehnung des Werkstückes in Richtung seiner Rotationsachse bzw. der Breite der Verzahnung).

Analog gilt für Schrägverzahnungen entsprechend, dass die Kontaktpunkte auf gegenüberliegenden Flanken einer Zahnlücke unterschiedliche Höhenlagen aufweisen, wenn die Schleifscheibe zunächst den Schrägungswinkel der Schrägverzahnung einnimmt, und dann bspw. das Werkstück um seine Rotationsachse etwas vor- und zurückgedreht wird. Diese Höhendifferenz erfindungsgemäß dadurch gemildert oder ausgeglichen werden, dass die Schleifscheibe ihren "Schrägungswinkel" verändert, also um eine Achse parallel zu einem (vorzugsweise die Lücke teilenden) Radius geschwenkt wird. Dies ist insbesondere dann vorteilhaft, wenn Zahnräder mit unterschiedlicher Breite vermessen werden sollen und durch Einstellung der Schwenkung um die radiusparallele Achse sichergestellt werden kann, dass die Kontaktierung tatsächlich auf der Zahnflanke und nicht etwa an der Kante des Zahnes bzw. außerhalb der Lücke (und somit gar nicht) erfolgen würde.

Wichtig ist, dass die Antastbewegung durch eine dieser vorgenannten Bewegungen oder auch durch Überlagerung mehrerer davon, also durch Nutzung mehrerer Maschinenachsen durchführbar ist. Das Maß der Verdrehung beziehungsweise Verschiebung wird dabei protokolliert und dem Messergebnis zugrunde gelegt.

Wie vorstehend ausgeführt lässt sich eine Zahnflanke bei Innenverzahnungen dann besonders gut mit einer Schleifscheibe antasten, wenn Schleifscheibe und Zahnlücke (beziehungsweise eine die Zahnlücke symmetrisch teilende gedachte Ebene (bei Geradverzahnungen) bzw. Fläche (bei Schrägverzahnungen) unter einem Winkel α ≠0 ausgerichtet sind. Die verbesserte Erreichbarkeit der einen Zahnflanke geht dabei zu Lasten der Erreichbarkeit der in der Zahnlücke gegenüberliegenden anderen Zahnflanke. Soll auch diese vermessen werden, so ist durch geeignete Positionier- beziehungsweise Antastbewegungen der vorbeschriebenen Art die Schleifscheibe so auszurichten, dass auch die der ersten Zahnflanke gegenüberliegende zweite Zahnflanke in gleicher Weise kontaktiert werden kann.

Nach einer bevorzugten Ausführungsform der Erfindung werden auf einer Zahnflanke zunächst mehrere Punkte vermessen (bspw. auf bestimmten Durchmessern bzw. verteilt über die Breite der Lücke), bevor die Punkte einer anderen Zahnflanke vermessen werden. Dadurch erübrigen sich zusätzliche Verfahrbewegungen, bevor die Schleifscheibe eventuell wieder in die gleiche Zahnlücke zur Vermessung eines anderen Punktes auf der bereits vermessenen Zahnflanke zurückgeführt werden muss.

Denkbar ist es jedoch auch, dass zwischen mehreren Messpunkten auf einer Zahnflanke auch Punkte wenigstens einer anderen Zahnflanke vermessen werden. Dies kann die in der Zahnlücke gegenüberliegende Zahnflanke oder eine beliebige andere Zahnflanke der Innenverzahnung sein. Sofern für eine Innenverzahnung mehrere Zahnflanken über den Umfang verteilt zu vermessen sind, so können die erforderlichen Verfahrbewegungen hinsichtlich Dauer und Wegstrecke optimiert werden. Dabei kann es sich als vorteilhaft herausstellen, zwischen der Vermessung einzelner Punkte innerhalb einer bestimmten Zahnlücke auch andere Zahnlücken anzufahren und zu vermessen. Hauptgrund dafür könnte die erforderliche Verschwenkung von Schleifscheibe und Zahnlücke relativ zueinander um den Winkel 2α sein, der zur erfindungsgemäßen, unmittelbar aufeinanderfolgenden Kontaktierung zweier Punkte auf einander gegenüberliegenden Zahnflanken einer Zahnlücke erforderlich wäre.

Gleichwohl kann es zweckmäßig sein, das erfindungsgemäße Verfahren so auszuführen, dass nach dem Vermessen wenigstens eines Punktes auf einer ersten Zahnflanke wenigstens ein Punkt auf der in der Zahnlücke gegenüberliegenden zweiten Flanke vermessen wird.

Weitere vorteilhafte Ausführungsformen ergeben sich aus den Unteransprüchen.

Nachfolgend soll eine Ausführungsform des erfindungsgemäßen Verfahrens anhand der
Figuren näher beschrieben werden. Dabei zeigen
   - Fig. 1: eine Vermessung von Außenverzahnungen,
   - Fig. 2: das Kontaktierungsproblem bei Vermessung von Innenverzahnungen,
   - Fig. 3: die erfindungsgemäße Positionierung von Schleifscheibe und Zahnlücke, und
   - Fig. 4: ein Zahnrad in schematischer Darstellung.

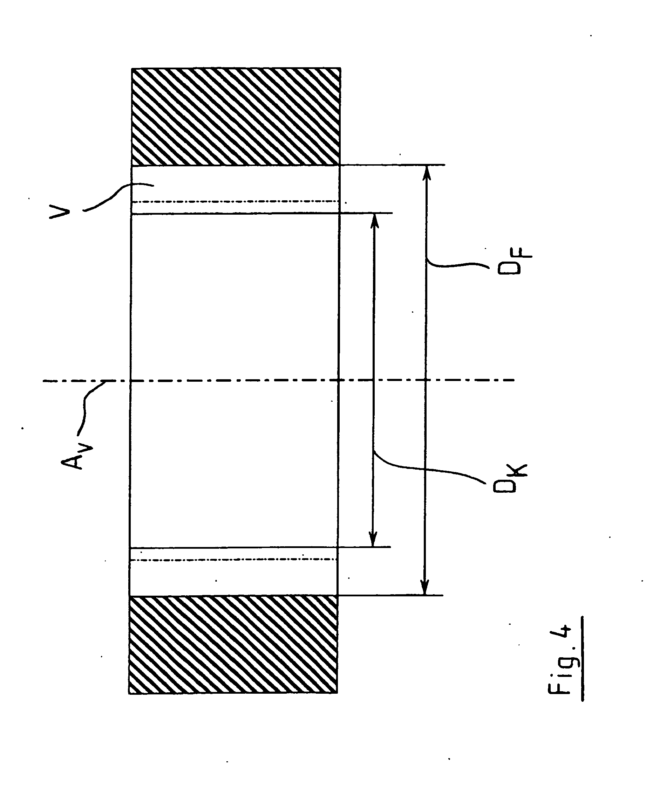

Fig. 4 zeigt in schematischer Querschnittsansicht ein um die Achse Aᵥ ausgebildetes Zahnrad mit einer Verzahnung V. Die Verzahnung V erstreckt sich dabei in radialer Richtung von einem innenliegenden Kopfkreisdurchmesser D_{K} bis zu einem den Zahngrund umschreibenden Fußkreisdurchmesser D_{F}.

Fig. 1 war bereits im Rahmen der Beschreibungseinleitung erläutert worden. Zu sehen ist dort, dass eine Schleifscheibe S in die Zahnlücke L einer Außenverzahnung teilweise hineinragt. Durch eine Antastbewegung (beispielsweise in Richtung der Rotationsachse A_{S} der Schleifscheibe S) wird die Schleifscheibe S bis zum Kontakt auf einer der beiden Zahnflanken F₁ oder F₂ bewegt, wobei diese Kontaktierung im Bereich zwischen dem Kopfkreisdurchmesser D_{K} und dem Fußkreisdurchmesser D_{F} erfolgt, was im Sinne guter Vermessungsergebnisse angestrebt wird.

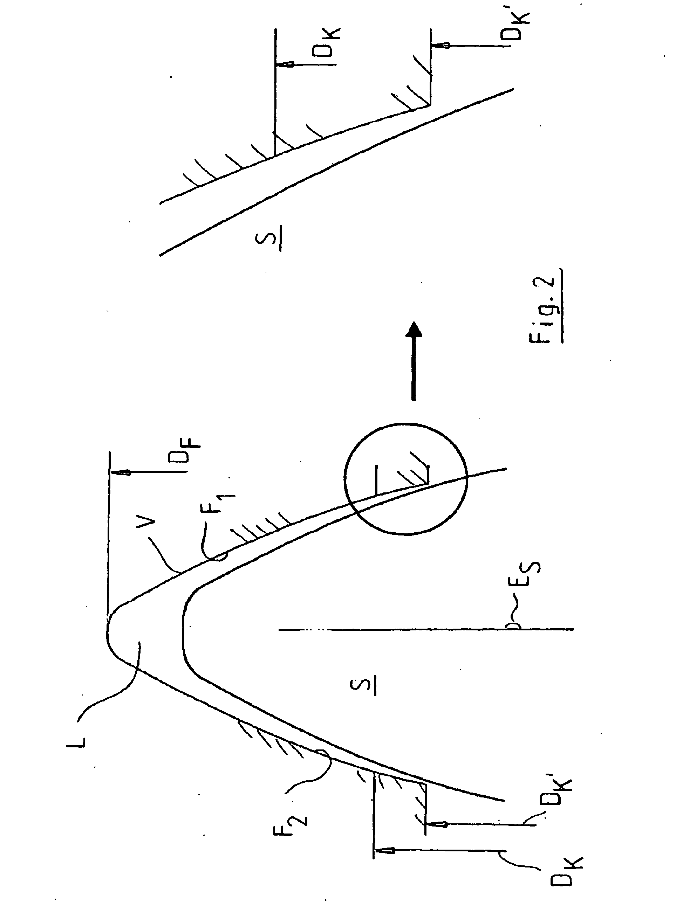

Aus Fig. 2 ist ersichtlich, dass die Kontaktierung einer Zahnflanke F₁ oder F₂ innerhalb einer Zahnlücke L einer Innenverzahnung V erheblich schwieriger zu bewerkstelligen ist Das gegenüber der Außenverzahnung anders ausgebildete Verzahnungsprofil der Innenverzahnung V verdeutlicht, dass die Schleifscheibe S die Lücke L im Rahmen einer Annäherungsbewegung bevorzugt im Bereich des Kopfkreisdurchmessers D_{K} kontaktieren wird, und nicht etwa im Bereich der Zahnflanken F₁ oder F₂, wie dies anzustreben wäre. Darüber hinaus könnte der Kopfkreisdurchmesser D_{K} auch nicht ausreichend bekannt sein, so dass eine Kontaktierung im Bereich D_{K'} fälschlicherweise als Messwert berücksichtigt wird, obwohl dieser Durchmesser D_{K'} nicht dem Sollwert entspricht. Auch ein im Bereich des Kopfkreisdurchmessers verbliebener Grat kann zu vorzeitiger Kontaktierung von Schleifscheibe und Verzahnung führen und die Messung ebenfalls verfälschen.

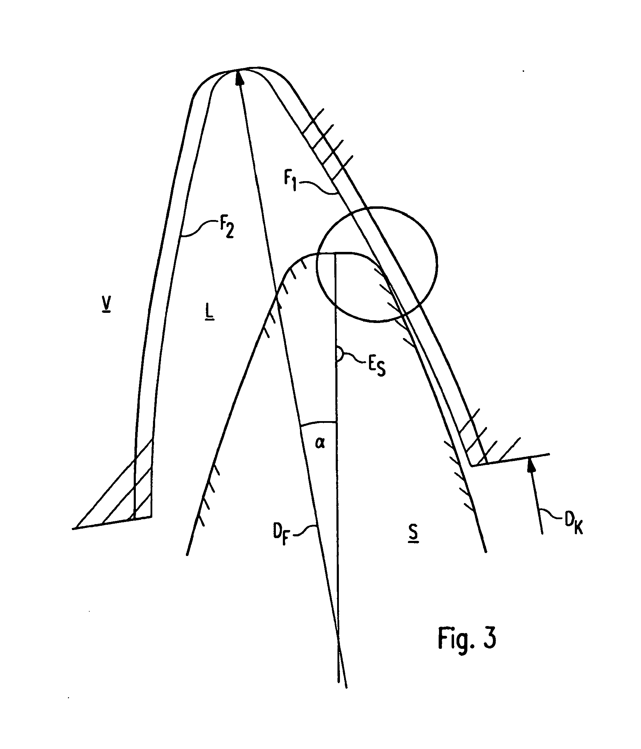

Gemäß Fig. 3 sieht das erfindungsgemäße Verfahren daher vor, zwischen der Rotationsebene E_{S} und dem Fußkreisdurchmesser D_{F} der jeweiligen Zahnlücke L einen Winkel α einzustellen, der größer ist als Null. Dadurch, dass zwischen dem Fußkreisdurchmesser D_{F} (oder einer gedachten, die Zahnlücke L mittig teilenden Ebene bzw. Fläche) und der Rotationsebene E_{S} der Schleifscheibe S ein Winkel α ≠0 eingestellt wird, kann die Schleifscheibe (vorzugsweise im Bereich ihres größten Durchmessers) gezielt und sicher an eine der beiden Zahnflanken F₁ (in Fig. 3 dargestellt) oder F₂ herangeführt werden, so dass die Kontaktierung sicher zwischen dem Fußkreisdurchmesser D_{F} und dem Kopfkreisdurchmesser D_{K} erfolgen kann. Dadurch ist ein verlässlicher Messwert zu ermitteln, der die Genauigkeit der für die weitere Bearbeitung zugrunde zu legenden Daten und damit die Qualität der zu fertigenden Verzahnung verbessert.

## Patentansprüche

1. Verfahren zum Vermessen der Zahnlücke (L) einer Innenverzahnung, bei dem der Kontakt einer Schleifscheibe (S) mit der Verzahnung (V) erkannt und ausgewertet wird, wobei die Innenverzahnung (V) mit einem Kopfkreisdurchmesser (D_{K}) um eine Achse (A_{V}) ausgebildet ist, und wobei die Schleifscheibe (S) zum Schleifen von Zahnlücken (L) um eine Schleifscheibenachse (A_{S}) und in einer Rotationsebene (E_{S}) drehbar ist,
**gekennzeichnet durch** folgende Bedingungen:
A) die Schleifscheibe (S) und die Zahnlücke (L) werden in einer Positionierbewegung relativ zueinander derart ausgerichtet, dass der lückenteilende Fußkreisdurchmesser (D_{F}) der zu bearbeitenden Zahnlücke (L) die Rotationsebene (E_{S}) der Schleifscheibe unter einem Winkel α schneidet mit der Bedingung α #0,
B) Die Schleifscheibe (S) und die Zahnlücke (L) werden in einer Antastbewegung relativ zueinander so weit verfahren, bis die Schleifscheibe eine erste Flanke (F₁) der Zahnlücke (L) im Bereich zwischen Kopfkreisdurchmesser (D_{K}) und Fußkreisdurchmesser (D_{F}) der Innenverzahnung (V) berührt,
wobei Bedingung A spätestens im Moment der Berührung gemäß Bedingung B erfüllt ist.

2. Verfahren nach Anspruch 1, **dadurch gekennzeichnet, dass** die Schleifscheibe (S) bei der Positionierbewegung in die Zahnlücke (L) hineinbewegt wird.

3. Verfahren nach Anspruch 1 oder 2, **dadurch gekennzeichnet, dass** die Antastbewegung erfolgt durch
a) eine Drehung der Innenverzahnung (V) mit der Zahnlücke (L) um die Achse (A_{V}), und/oder
b) eine Verschiebung der Schleifscheibe in ihrer Rotationsebene (E_{S}), und/oder
c) eine Verschiebung der Schleifscheibe in Richtung ihrer Schleifscheibenachse (A_{S}) und/oder
d) ein Verschwenken der Schleifscheibe um eine zur Werkstückachse (A_{V}) parallele Achse, und/oder
e) ein Verschwenken der Schleifscheibe um eine zum Fußkreisdurchmesser (D_{F}) parallele Achse.

4. Verfahren nach einem der vorigen Ansprüche, **dadurch gekennzeichnet, dass** auf einer Zahnflanke (F) mehrere Punkte vermessen werden.

5. Verfahren nach dem vorhergehenden Anspruch, **dadurch gekennzeichnet, dass** zwischen Messpunkten auf einer Zahnflanke (F₁) auch Punkte wenigstens einer anderen Zahnflanke (F₂, F₃...) der Verzahnung (V) vermessen werden.

6. Verfahren nach einem der vorigen Ansprüche, **dadurch gekennzeichnet, dass** nach dem Vermessen wenigstens eines Punktes auf einer ersten Zahnflanke (F₁) wenigstens ein Punkt auf der in der Zahnlücke (L) gegenüberliegenden zweiten Flanke (F₂) vermessen wird.

7. Verfahren nach dem vorhergehenden Anspruch, **dadurch gekennzeichnet, dass** zwischen Vermessungen auf der ersten und der zweiten Zahnflanke (F₁, F₂) der gleichen Zahnlücke (L) wenigstens ein Punkt auf einer Zahnflanke (F₃) einer anderen Zahnlücke der Verzahnung (V) vermessen wird.

## Claims

1. Method for measuring the tooth gap (L) of an internal gear, in which the contact of a grinding disc (S) with the gear teeth (V) is recognised and evaluated, wherein the internal gear (V) is formed with a tip diameter (D_{K}) about an axis (A_{V}), and wherein the grinding disc (S) for grinding tooth gaps (L) is rotatable about a grinding disc axis (A_{S}) and in a rotational plane (E_{S}), **characterised by** the following conditions:
A) the grinding disc (S) and the tooth gap (L) are aligned relative to one another in a positioning movement such that the root circle diameter (D_{F}) of the tooth gap (L) to be machined, which diameter divides the gap, intersects the rotational plane (E_{S}) of the grinding disc at an angle α with the condition α≠0,
B) the grinding disc (S) and the tooth gap (L) are moved in a final feed movement so far relative to one another until the grinding disc touches a first flank (F₁) of the tooth gap (L) in the area between tip diameter (D_{K}) and root circle diameter (D_{F}) of the internal gear (V),
wherein condition A is fulfilled no later than at the moment of contact according to condition B.

2. Method according to claim 1, **characterised in that** the grinding disc (S) is moved in the positioning movement into the tooth gap (L).

3. Method according to claim 1 or 2, **characterised in that** the final feed movement is achieved by
a) twisting of the internal gear (V) with the tooth gap (L) about the axis (A_{V}), and/or
b) displacement of the grinding disc in its rotational plane (E_{S}), and/or
c) displacement of the grinding disc in the direction of its grinding disc axis (A_{S}) and/or
d) swivelling of the grinding disc about an axis parallel to the workpiece axis (A_{V}), and/or
e) swivelling of the grinding disc about an axis parallel to the root circle diameter (D_{F}).

4. Method according to one of the preceding claims, **characterised in that** several points are measured on a tooth flank (F).

5. Method according to the preceding claim, **characterised in that** between measuring points on one tooth flank (F₁), points of at least one other tooth flank (F₂, F₃...) of the gear teeth (V) are measured.

6. Method according to one of the preceding claims, **characterised in that** following measurement of at least one point on a first tooth flank (F₁), at least one point on the second flank (F₂) lying opposite in the tooth gap (L) is measured.

7. Method according to the preceding claim, **characterised in that** between measurements on the first and second tooth flank (F₁, F₂) of the same tooth gap (L), at least one point on a tooth flank (F₃) of another tooth gap of the gear teeth (V) is measured.

## Revendications

1. Procédé pour mesurer l'entredent (L) d'une denture interne, dans lequel le contact d'une meule (S) avec la denture (V) est détecté et exploité, dans lequel la denture interne (V) est formé avec un diamètre de cercle de tête (D_{K}) autour d'un axe (A_{V}) et dans lequel la meule (S) peut tourner autour d'un axe de meule (As) et dans un plan de rotation (E_{V}) pour meuler des entredents (L), **caractérisé par** les conditions suivantes :
A) la meule (S) et l'entredent (L) sont orientés l'un par rapport à l'autre au cours d'un mouvement de positionnement de sorte que le diamètre de cercle de pied (D_{F}) diviseur de l'entredent (L) à usiner coupe le plan de rotation (E_{S}) de la meule sous un angle α avec la condition que α ≠ 0,
B) la meule (S) et l'entredent (L) sont déplacés l'un par rapport à l'autre au cours d'un mouvement palpeur jusqu'à ce que la meule touche un premier flanc (F₁) de l'entredent (L) dans la zone située entre le diamètre de cercle de tête (D_{K}) et le diamètre de cercle de pied (D_{F}) de la denture interne (V),
la condition A étant remplie au plus tard au moment du contact selon la condition B.

2. Procédé selon la revendication 1, **caractérisé en ce que** la meule (S) est déplacée à l'intérieur de l'entredent (L) au cours du mouvement de positionnement.

3. Procédé selon la revendication 1 ou 2, **caractérisé en ce que** le mouvement palpeur s'effectue par
a) rotation de la denture interne (V) avec l'entredent (L) autour de l'axe (A_{V}), et/ou
b) déplacement de la meule dans son plan de rotation (E_{S}), et/ou
c) déplacement de la meule selon son axe de meule (A_{S}) et/ou
d) pivotement de la meule autour d'un axe parallèle à l'axe de la pièce A_{V}), et/ou
e) pivotement de la meule autour d'un axe parallèle au diamètre de cercle de pied (D_{F}).

4. Procédé selon l'une quelconque des revendications précédentes, **caractérisé en ce que** l'on mesure plusieurs points sur un flanc de dent (F).

5. Procédé selon la revendication précédente, **caractérisé en ce qu'**entre des points de mesure sur un flanc de dent (F₁), on mesure également des points d'au moins un autre flanc de dent (F₂, F₃,...) de la denture (V).

6. Procédé selon l'une quelconque des revendications précédentes, **caractérisé en ce qu'**après la mesure d'au moins un point sur un premier flanc de dent (F₁), on mesure au moins un point sur le second flanc (F₂) opposé par rapport à l'entredent (L).

7. Procédé selon la revendication précédente, **caractérisé en ce qu'**entre des mesures sur les premier et second flancs de dent (F₁, F₂) du même entredent (L), on mesure au moins un point sur un flanc de dent (F₃) d'un autre entredent de la denture (V).
